(19)

Europäisches Patentamt
European Patent Office
Office européen des brevets

(11) **EP 3 468 262 B1**

(12) **EUROPEAN PATENT SPECIFICATION**

(45) Date of publication and mention
of the grant of the patent:
**13.11.2019 Bulletin 2019/46**

(51) Int Cl.:
***H04W 52/02*** *(2009.01)*

(21) Application number: **18164124.2**

(22) Date of filing: **27.03.2018**

(54) **ENERGY EFFICIENT SCHEDULING METHOD AND ALGORITHM FOR THE NON-DETERMINISTIC TRAFFIC IN IEEE 802.15.4E TIME SLOTTED CHANNEL HOPPING (TSCH) MEDIUM ACCESS CONTROL**

ENERGIEEFFIZIENTES PLANUNGSVERFAHREN UND ALGORITHMUS FÜR DEN NICHT-DETERMINISTISCHEN VERKEHR BEI DER IEEE 802.15.4E-ZEITGESCHLITZTEN KANALSPRUNG (TSCH) MEDIENZUGRIFFSSTEUERUNG

PROCÉDÉ DE PROGRAMMATION ÉNERGÉTIQUEMENT EFFICIENTE ET ALGORITHME POUR LE TRAFIC NON DÉTERMINISTE DANS UN CONTRÔLE D'ACCÈS AU SUPPORT (MAC) À SAUT DE CANAL AVEC CRÉNEAUX TEMPORELS (TSCH) IEEE 802.15.4E

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2017 TR 201715187**

(43) Date of publication of application:
**10.04.2019 Bulletin 2019/15**

(73) Proprietor: **ORTA DOGU TEKNIK UNIVERSITESI 06800 Ankara (TR)**

(72) Inventors:
• **OZCEYLAN, Baver**
  **06800 Ankara (TR)**
• **UNLU, Berk**
  **06800 Ankara (TR)**
• **BAYKAL, Buyurman**
  **06800 Aankara (TR)**

(74) Representative: **Kayahan, Senem et al Yalciner Patent and Consulting Ltd. Tunus Cad. No: 85/3-4 Kavaklidere Cankaya 06680 Ankara (TR)**

(56) References cited:
• **ELSTS ATIS ET AL: "Scheduling High-Rate Unpredictable Traffic in IEEE 802.15.4 TSCH Networks", 2017 13TH INTERNATIONAL CONFERENCE ON DISTRIBUTED COMPUTING IN SENSOR SYSTEMS (DCOSS), IEEE, 5 June 2017 (2017-06-05), pages 3-10, XP033307532, DOI: 10.1109/DCOSS.2017.20 [retrieved on 2018-01-26]**
• **VILAJOSANA XAVIER ET AL: "A Realistic Energy Consumption Model for TSCH Networks", IEEE SENSORS JOURNAL, IEEE SERVICE CENTER, NEW YORK, NY, US, vol. 14, no. 2, 1 February 2014 (2014-02-01), pages 482-489, XP011533049, ISSN: 1530-437X, DOI: 10.1109/JSEN.2013.2285411 [retrieved on 2013-12-04]**
• **MARIA RITA PALATTELLA ET AL: "Traffic Aware Scheduling Algorithm for reliable low-power multi-hop IEEE 802.15.4e networks", 2012 IEEE 23RD INTERNATIONAL SYMPOSIUM ON PERSONAL, INDOOR AND MOBILE RADIO COMMUNICATIONS (PIMRC 2012) : SYDNEY, AUSTRALIA, 9 - 12 SEPTEMBER 2012, IEEE, PISCATAWAY, NJ, 9 September 2012 (2012-09-09), pages 327-332, XP032272997, DOI: 10.1109/PIMRC.2012.6362805 ISBN: 978-1-4673-2566-0**

**Description**

**TECHNICAL FIELD**

The invention is related to a network device and method that makes a schedule in the most efficient way and works in accordance with the IEEE 802.15.4e TSCH operation mode which enables to meet the average latency and reliability constraints, while minimizing the energy consumption for the transmission of packets which packets are sent in unpredictable and irregular intervals.

**BACKGROUND OF THE INVENTION (PRIOR ART)**

State-of-art solutions generally do not focus on scheduling with resource sharing. Instead, these solutions are based on allocating dedicated resource to leaf nodes with respect to the traffic intensity. Besides, the methods for resource sharing attempt to improve certain back-off parameters defined at the medium access control layer. Solutions deployed in the industry are based on allocating dedicated resources, hence they are useful for the deterministic traffic. However, these kind of solutions are inefficient for the non-deterministic traffic. Improving back-off parameters are not sufficient to increase the efficiency since the efficiency can be achieved by only improving back-off parameters is limited due to the scheduled resource and distribution of the leaf nodes that share the resource.

Patent document numbered WO 2017/037403 A1 invention titled "Scheduling Algorithm and Method for Time Slotted Channel Hopping (TSCH) MAC" is present on the subject. However, assumptions on the network traffic is different. In the patent, network traffic is assumed as pre-determined and predictable. By assigning redundant cells, it is guaranteed that reliability does not decrease in case of packet loss.

Patent document numbered US2008279155 invention titled "Scheduling Algorithm and Method for Time Slotted Channel Hopping (TSCH) MAC' is present on the subject. The method described in this patent document is based on constructing a schedule by central coordinator with the information of all devices and link statistics in the network. Thus, the patent proposes a centralized solution instead of a distributed one.

Patent document numbered US 20130250928 A1 invention titled "Scheduling in a multi-hop wireless network" is present on the subject. In this patent, a method on the position of the assigned cells within the frame is proposed in which dedicated cells are used.

Patent document numbered US9485157B2 invention titled "Synchronized routing updates for TSCH networks" is present on the subject. A method for scheduling the control messaging necessary for the routing protocol is introduced. The method provides for gathering information for routing in a distributed or centralized manner. In the method, cell sets, named chunks, are assigned to parent nodes, hence packet loss due to collision is prevented. Thereafter, parent nodes assign the cells within the set to child nodes. The cells assigned to the child nodes are assigned in dedicated manner; therefore, they are not shared.

Paper titled "Scheduling High-rate Unpredictable Traffic in IEEE 802.15.4 TSCH Networks" is present on the subject. In this paper, a scheduling method is proposed for wearable devices. In the study, with the purpose of providing high data rate, using shared cells is proposed in order to increase the data rate of the TSCH structure. Even though the models in the study are designed according to the ALOHA protocol, CSMA-CA TSCH protocol is used in the standard. Since the schedule is pre-defined and known by each device, the scheduling algorithm is not adaptive even though it is distributed. Therefore, the energy efficiency is low. In addition, there is no study on latency in the paper.

Paper titled "Decentralized Traffic Aware Scheduling for multi-hop Low Power Lossy Networks in the Internet of Things" is present on the subject. This paper aims to minimize the end to end delay. However, it is assumed that there is periodic traffic on the network and the fact that the arrival time of the packets is known is taken advantage off.

DetNet is a working group within IETF: Its purpose is to form the routing standards on the network layer for the deterministic networks and it does not enforce a scheduling method on the medium access layer.

Developed in order to eliminate the above-mentioned disadvantages, the subject invention Energy Efficient Scheduling Method and Algorithm for the Non-Deterministic Traffic in IEEE 802.15.4e Time Slotted Channel Hopping (TSCH) Medium Access Control has a different structure than the most recent applications in the known art.

**BRI EF DESCRIPTION OF THE INVENTION**

The invention is related to an Energy Efficient Scheduling Method and Algorithm for the Non-Deterministic Traffic in IEEE 802.15.4e Time Slotted Channel Hopping (TSCH) Medium Access Control, for the purpose of eliminating the above-mentioned disadvantages and bringing advantages to the related technical field.

The purpose of the invention is to put forth a method which provides for the most efficient distribution of the nodes to the given shared resource with the improved estimation model.

Another purpose of the invention is to put forth a method which presents a scheduling method on the medium access layer.

Another purpose of the invention is to put forth a method which uses shared cell.

Another purpose of the invention is to put forth a method which is designed for the non-deterministic traffic.

Another purpose of the invention is to put forth a method which provides for finding the most efficient solution by fulfilling the latency constraint.

Another purpose of the invention is to put forth a method which provides for managing the trade-off between the reliability, latency and efficiency resulting from the use of shared cell.

Another purpose of the invention is to put forth a method which provides for fulfilling the important requirements such as low latency while increasing energy efficiency by using shared cells.

Another purpose of the invention is to put forth a method which is designed according to the standards for industrial applications which do not require high data rate.

Another purpose of the invention is that the scheduling method does not cause high computational complexity such as the other methods based on analytical models.

Another purpose of the invention is to put forth a method which provides for constructing a schedule according to the distributed computations made by the devices by using local information.

Another purpose of the invention is to put forth a method on the number of cells needed to be assigned and the decision of the cells which the child nodes will use.

The network model designed to be used in the device is based on the experiments instead of analytical calculations. The advantage of that is the scheduling method in the proposed device does not create a high computational complexity such as the other methods based on analytical models. In other words, the proposed device does not need high computational power. Low computational complexity also decreases the processing time and the energy consumption significantly. Along with these, since the devices make a schedule based on instantaneous measurements, they can adapt to changing environmental effects easily.

The proposed devices transmit the data collected from the sensors in the most efficient way to the centre unit by taking the quality of service into consideration. Besides, these devices enable using the existing methods in which the other parameters are improved in addition to the proposed scheduling method.

In order to realize all the purposes which will appear from the detailed description below, the invention is related to the Energy Efficient Scheduling Method and Algorithm for the Non-Deterministic Traffic in IEEE 802.15.4e Time Slotted Channel Hopping (TSCH) Medium Access Control.

## BRIEF DESCRIPTION OF THE FIGURES

In Figure 1, a sample parent node and child nodes connected to the parent node are shown.

In Figure 2, the proposed network device constructs a sample schedule according to the sample topology shown in Figure 1 and applying Algorithm 1 at the parent node position. Different time slots and channels are shown as slotOffset and channelOffset on the axes.

In Figure 3, it is shown that the proposed device divides the network into two subnetworks.

In Figure 4, a topology in which 3 parent nodes are indicated with the letters "A", "B" and "C" is shown.

In Figure 5, cells assigned by the dedicated cell scheduling method for the transmission of the packets are also shown.

## DETAILED DESCRIPTION OF THE INVENTION

In this detailed explanation, the subject innovation is explained for the better understanding of the subject by examples which will not create any limiting effect. Energy Efficient Scheduling Method and Algorithm for the Non-Deterministic Traffic in IEEE 802.15.4e Time Slotted Channel Hopping (TSCH) Medium Access Control is described accordingly.

In today's industry, measurements are taken continuously in order to provide the process control in the best manner. For example, sensory units planted at a wind power plant are instructed to transmit the data which will have importance for the power plant such as the direction and force of the wind. By using the collected data, it can be ensured that the power plant operates in the most efficient way and produces solutions for the changing conditions. As the number of the sensors used in the industrial areas increase, wireless communication between the units became inevitable. In the way that these sensors are in communication, they also do not use cable for power, in other words, the sensors are expected to operate efficiently in the longest period with minimum battery consumption. The technology of the internet of things is integrated in the industrial field to this end. Especially for the applications in the industrial field, within the scope of this concept, Time-Slotted Channel Hopping (TSCH) operation mode of the IEEE 802.15.4e standard is developed. This communication standard provides a synchronized medium access control infrastructure with channel hopping feature to the user. The IETF 6TiSCH working group attempts to create a protocol stack in which the TSCH standard and the internet protocol are used. In this context, 6TiSCH protocol stack is expected to be standardized for industrial devices in the near future. One of the features 6TiSCH structure brings is the 6P protocol inserted in the stack. This protocol is an upper layer for the TSCH medium access control layer and is quite important since it provides for the scheduling algorithms specific to applications and traffics to be embedded into devices using the 6TiSCH structure.

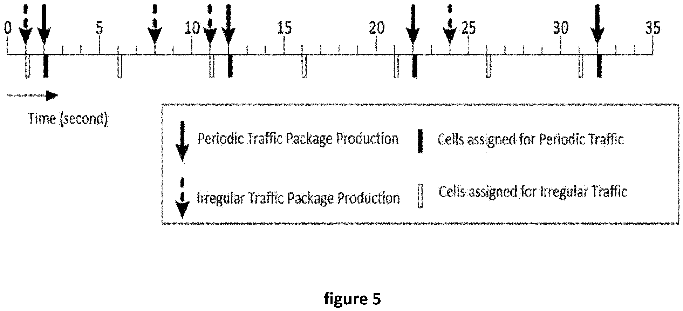

In general, there are two types of data traffic in industrial networks. The first is the periodic traffic in which packets are sent in definite intervals such as reporting and control. In addition, there is a type of traffic in which the packets are sent in unpredictable and non-deterministic intervals. This type of traffic is called sporadic traffic and even though the packet intervals are long, data transmission in short periods is expected in order to provide for the service quality. Traffic created by the sensors which report the change detected in the measurements to the centre instantaneously can be given as an example to this type of traffic. In Figure 5, examples for these two types of traffic are shown. In the periodic traffic given in the example, packets arrive by 10 second periods. In the sporadic traffic, packets arrive with a probability such that average inter-arrival time between packets is 10 seconds.

Besides, in Figure 5, cells assigned with the dedicated cell method in order to transmit these packets are shown. Since the cells assigned for the periodic traffic are right after the packet arrival time, the packets are sent without experiencing any latency. However, cells assigned for the sporadic traffic cause latency since it is not known when the packets will arrive. In the example, the average latency for sporadic traffic is 2,5 seconds. In terms of energy efficiency, all the cells assigned for the periodic traffic are used for packet transmission. That means 100% energy efficiency. However, as can be seen in the figure, some of the cells assigned for the sporadic traffic are idle. This corresponds to approximately 66% energy efficiency for the example given. Energy efficiency is thought as the ratio of the number of the packets sent and the cells used to receive packets to the number of the packets sent and the number of all the assigned cells. The conclusion to be drawn in this context is that less cells need to be assigned in order to increase energy efficiency, however, this causes significant increase in the average latency. In order to decrease the average latency, more cells need to be assigned. In this method, a decrease in energy efficiency takes place. In addition to these, the industrial applications have strict latency requirement. For the traffic flows given in the example, if we assume that the average latency requirement is 200 milliseconds, while the periodic traffic fulfills this requirement, the average latency obtained in the sporadic traffic is far away from this value. In order to provide for 200 milliseconds average latency, cells should be assigned in 400 millisecond intervals. However, assigning cells this frequently will decrease the energy efficiency to 15%.

The patent titled "Scheduling Algorithm and Method for Time Slotted Channel Hopping (TSCH) MAC" introduces a solution for these types of issues for periodic traffic. The method proposed in the invention is essentially based on the fact that arrival times of the packets in periodic traffic are known. According to the obtained time information, the method which will cause the minimum latency is proposed. In addition to this, in order to compensate for any unexpected packet loss, the method of assigning redundant cells is proposed.

In the cell scheduling methods mentioned so far, it is assumed that in every cell one receiver and one transmitter node can communicate. However, the TSCH standard also allows for using shared cell. The shared cell allows for assigning a cell to more than one receiver-transmitter pair. In the properly managed shared cell protocols, energy efficiency can increase in significant levels whereas in the ones not managed properly, the packet loss can raise and no data exchange could be experienced. To give an example, let's assume that there are two transmitter nodes having sporadic traffic towards the same receiver node and these two transmitters require 200 milliseconds average latency. In the case where separate dedicated cells are assigned to both transmitters, as mentioned above, 15% energy efficiency can be obtained. If these two transmitters are assigned to the same shared cell, while approximately 28% energy efficiency is obtained, it can be ensured that the average latency remains at 200 milliseconds. However, the probability of packet loss that the improperly made schedule will cause when using shared cells creates a risk in using scheduling methods in which these types of cells are used. In other words, in the case of using shared cells, reliability is added to the trade-off between latency and energy efficiency mentioned for the dedicated cells.

A network device and method are proposed within the scope of this patent. The proposed network device can operate in the above-mentioned manner in accordance with the IEEE 802.15.4e TSCH operation mode. The method that is used in the device fulfills the average latency and reliability requirements while minimizing the energy consumption for sporadic traffic. These requirements are met with the shared cell feature defined in the TSCH operation mode. As a result, these devices that will be used in industrial networks have the ability to manage the trade-off between the average latency, reliability and energy efficiency in the shared cells. In a wireless network with star topology, root and leaf nodes can communicate over a shared cell. With the network devices proposed here to be used for these nodes, the most efficient scheduling of the shared cell can be provided by taking quality of service constraints such as latency and reliability into consideration. Latency is measured as the average of the latency of the packets received by the nodes and the reliability is measured as the ratio of the number of the received packets to the number of arrived packets. The energy efficiency used as the success criterion is calculated with the average amount of energy consumed for one successful packet transmission.

The scheduling method in the proposed devices is based on a computer assisted model generated and validated before. In the model, the packet delivery ratio (PDR) is taken as the basic variable and by using PDR, the relationship between certain network parameters are examined. As a result of the modeling, it was concluded that there is a linear relationship between the PDR and the network parameters. By this conclusion, it was found that the latency metric can be written in terms of PDR. The energy amount defined for the energy efficiency metric was also calculated by using the PDR and traffic intensity parameters.

Starting out with the results revealed by the model, proposed devices use a scheduling method based on predicting the effect of the changes in network parameters on the quality of service metrics, with the help of the instantaneous measurements they can provide in the current state. After making necessary calculations a root node finds the most efficient scheduling that meets the constraints in the control metrics according to the method. Thereafter, it chooses the amount of the shared cells reserved for the leaf nodes and the leaf nodes which share one cell according to this scheduling. The root node makes this choice based on the traffic intensity of the leaf nodes. The aimed efficiency is achieved by the obtained network configuration.

The more detailed description of the method of the invention, Energy Efficient Scheduling Method and Algorithm for the Non-Deterministic Traffic in IEEE 802.15.4e Time Slotted Channel Hopping (TSCH) Medium Access Control, is given below.

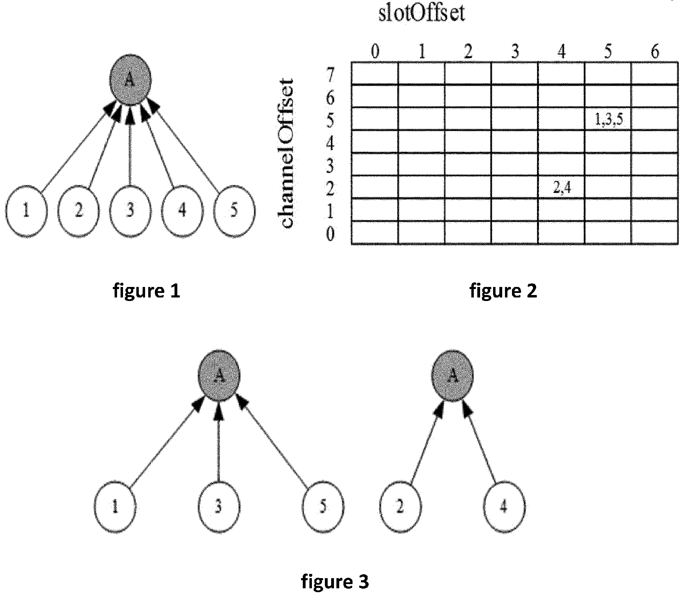

The proposed device is at the parent node position in the network. Its task is to assign shared cells, which can meet the requirements, to the child nodes connected to itself. By applying Algorithm 1, the proposed device determines the number of shared cells to be assigned and the distribution of these cells among child nodes. In Figure 1, a sample parent node and child nodes connected to this parent node are shown. In this example, there are 5 child nodes connected to the parent node shown with "A". According to the example topology shown in Figure 1, when the proposed network device applies Algorithm 1 at the parent node position, it constructs the sample schedule shown by Figure 2. In this example schedule, it is seen that 2 shared cells are assigned. While the cell marked as (1,3,5) is being used by Node 1, Node 3 and Node 5, the cell marked by (2,4) is used by Node 2 and Node 4. When the obtained configuration is examined, it can be said that the proposed device divides the network into two subnetworks as shown in Figure 3.

The selection of shared cell in the proposed device is made according to three rules indicated below:

    1. A parent node should use different *slotOffset* (time slot offset) values for each subnetwork.
    2. Interconnected parent nodes should use different *slotOffset* values for each subnetwork.
    3. Parent nodes which are not interconnected but physically close to each other should use a different *channelOffset* (channel offset) values for each subnetwork.

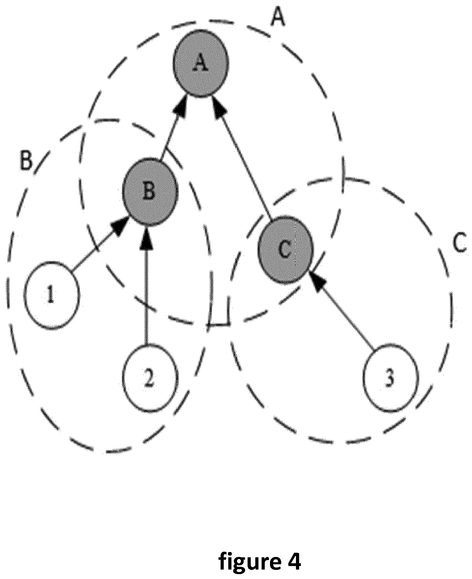

By means of the indicated rules, distributed operation of the proposed devices and the possibility of a parent node to be in the position of a child node of another parent node are provided. As an example, a topology in which there are 3 parent nodes indicated with the letters "A", "B" and "C" in Figure 4. While A and B are the example of two interconnected parent nodes, B and C are the example of two parent nodes which cannot interconnect yet physically close to each other. Besides, whereas B and C are parent nodes themselves, they are also the child nodes of A node.

The proposed device makes the performance measurements of the subnetworks connected to itself according to the current state and finds the best network configuration by making estimations according to the obtained measurements. The performance metrics are the packet delivery ratio (PDR) and packet latency (*d*). The estimations are based on a subnetwork modeling discovered experimentally. The model provides for the estimation of the performance metrics a parent node can obtain for different parameters with a shared cell. These parameters are the total traffic load created by the child nodes assigned to the shared cells and the frame length. In other words, the proposed device can estimate the effect of the change in the total traffic load of the shared cell on the performance metrics with the help of the measurements.

Since the proposed device can assign more than one shared cells, each cell will have a different traffic load. Therefore, the variable shown by $\theta_{\mathrm{frame}}^{i}$ is defined. With this variable, the value of the total traffic load assigned to the $i^{\text{th}}$ shared cell is expressed in terms of average packet number. The proposed device can estimate the PDR performance metric according to the following equation:

$$P_{PDR}(\theta^i_{frame}) = 1 - K_{PDR} \times \theta^i_{frame} \times \left[1 - \frac{1}{n^i_C}\right] \qquad (1)$$

$n^i_c$ variable is the number of the total child nodes assigned to the $i^{th}$ shared cell. $K_{PDR}$ coefficient is a constant value. This coefficient depends on the wireless medium and the parameters on the other layers. This coefficient is calculated by making the performance measurements according to the current state by the proposed device, instead of assigning a fixed value. In case where there are more than one shared cells, different $K_{PDR}$ values can be calculated for each cell.

Therefore, the $k^i_{PDR}$ variable is defined. This variable shows the coefficient value calculated for the $i^{th}$ shared cell and is calculated according to the following equation:

$$k^i_{PDR} = \frac{1 - m^i_{PDR}}{\theta^i_{frame} \times \left[1 - \frac{1}{n^i_C}\right]} \qquad (2)$$

$m^i_{PDR}$, is the PDR metric calculated in the $i^{th}$ shared cell. After calculating the coefficients for each shared cell, the proposed device reaches the constant $K_{PDR}$ coefficient using the following equation:

$$K_{PDR} = \frac{1}{s} \times \sum_{i=1}^{s} k^i_{PDR} \qquad (3)$$

The s variable shown in Equation (3) is the total number of assigned shared cells. The average latency, which is another performance metric, is estimated according to the following equations:

$$d_{frame}(P_{PDR}) = \frac{1}{2} \times e^{K_d \times (1 - P_{PDR})} \qquad (4)$$

$$d(P_{PDR}, frameLength) = d_{frame} \times frameLength \times slotTime \qquad (5)$$

In the equations above, while the value of average latency in terms of frame length is $d_{frame}$, $d$ corresponds to the value of average latency in terms of seconds. *frameLength* and *slotTime* is the value of the frame and time slot lengths in terms of seconds, respectively. In this equation, there is $K_d$ constant coefficient and its value is calculated using performance measurements like $K_{PDR}$ coefficient. $k^i_d$ variable shows the coefficient value calculated for the $i^{th}$ shared cell and found according to the following equation:

$$k^i_d = \frac{\ln(2 \times m^i_d)}{1 - m^i_{PDR}} \qquad (6)$$

$m^i_d$ is the average latency metric calculated in the $i^{th}$ shared cell. After the coefficients are calculated for each shared cell, the proposed device reaches the constant $K_d$ coefficient by using the following equation:

$$K_d = \frac{1}{s} \times \sum_{i=1}^{s} k^i_d \qquad (7)$$

The purpose of the proposed device is to provide for the threshold values determined for the PDR and average latency with minimum energy consumption. Whereas the PDR value needs to be above the determined threshold value, the value of the average latency needs to be below the determined threshold value. The energy consumption is calculated according to the following equation:

$$P_{avg}\left(\vec{\Theta}_{frame}\right) = \frac{1}{\Lambda_{frame}} \times \left[ s + \sum_{i=1}^{s} \frac{\theta_{frame}^{i}}{1 - K_{PDR} \times \theta_{frame}^{i} \times \left[1 - \frac{1}{n_{C}^{i}}\right]} \right] \qquad (8)$$

$P_{avg}$ is the average energy consumed for receiving a packet successfully. $\vec{\Theta}_{frame}$ is named as the traffic load vector. Each element in this vector corresponds to a shared cell and shows the total traffic load in that cell. $\Lambda_{frame}$ shows the total traffic load in the child nodes connected to the same parent node and is calculated according to the following equation:

$$\Lambda_{frame} = \sum_{v=1}^{N_C} \lambda_{frame}^{v} \qquad (9)$$

The $\lambda_{frame}^{v}$ value shown in Equation (9) shows the traffic load of the $v^{th}$ child node within a frame. Since the proposed device calculates the $K_{PDR}$ and $K_d$ constants according to the measured metrics, it easily adapts to the changes and meets the reliability and average latency requirements determined by the user while optimizing the energy efficiency by adjustable parameters. These adjustable parameters are the shared cell number ($s$), frame length (*frameLength*) and traffic load vector ($\vec{\Theta}_{frame}$). The frame length constitutes the base of TSCH structure and effects all the scheduling algorithms. With the purpose of allowing the proposed device to work in parallel with different technologies, *frameLength* parameter can only be chosen from the values indicated in the $L_{frameLength}$ list. This list should be determined by the user, taking the other technologies and algorithms to be used into consideration. The $\vec{\Theta}_{frame}$ parameter can be adjusted by changing the cells assigned to child nodes. Besides, $s$ and $\vec{\Theta}_{frame}$ parameters can be changed by creating a new shared cell or removing an existing shared cell. In addition to these, there are constant parameters that the proposed device uses but cannot make any change. These are the total traffic load ($\Lambda_{frame}$) and the total child node number ($N_c$). $\Lambda_{frame}$ is determined by the application layer. The proposed device calculates this parameter according to Equation 10. $N_c$ is determined by the network layer and the routing protocol. This parameter is calculated according to the following equation by the proposed device:

$$N_C = \sum_{i=1}^{s} n_{C}^{i} \qquad (10)$$

The proposed device finds the optimum values for the adjustable parameters by applying Algorithm 1. In Line 2 in Algorithm 1, the device calculates the $K_{PDR}$ and $K_d$ constants according to the current state. The rest of the algorithm is applied according to these values and these values do not change throughout the algorithm. The current state does not have any effect after Line 2. In Line 3 and Line 4, the $N_c$ and $\Lambda_{frame}$ values, which are constant parameters, are calculated respectively. In Line 5, $P_{avg}$ is assigned to the biggest value and it is updated as the lower $P_{avg}$ values are found in the rest of the algorithm. In the loop starting at Line 6, the device repeats the processes within the loop for each *frameLength* value in the $L_{frameLength}$ list. In the loop starting at Line 7, the device repeats the processes in the loop for each possible s value according to selected *frameLength* value. In Line 8, $\vec{\Lambda}_{frame}$ vector is formed. This vector shows the traffic load of each child node. Each element in the vector shows the traffic load of the corresponding node in terms of the average number of packet arrivals within a frame. The Line 9 creates the $\vec{\Theta}_{frame}$ parameter such that each element will be 0. This parameter is updated as the shared cells are distributed. In Line 10, $\vec{V}$ vector is formed. Each element in this vector corresponds to a child node and indicates the shared cell assigned to the child node. In the loop which starts at Line 11 and ends at Line 16, the traffic load of the child nodes is distributed so that each shared cell will have equal load and $\vec{V}$ and $\vec{\Theta}_{frame}$ values will be updated according to this distribution. In Line 17, the cell which has the highest traffic load is determined in order to check the requirements. In Line 18, the PDR metric of the cell having the highest traffic load is estimated. In the Line 19, the average latency metric for the same cell is estimated. In Line 20, the estimated PDR and average latency values are compared according to the threshold values determined by the user. If the PDR value is higher than the threshold value and the average latency value is lower than the threshold value, the device decides that the corresponding state meets the requirements and starts calculating the average energy consumption. From Line 21 to Line 24, the average energy consumption is calculated for this state and saved on the $P'_{avg}$ variable. The value saved on Line 25 and the lowest energy consumption so far are compared. If the saved value is smaller, the lowest energy consumption on Line 26 is updated; the state parameters corresponding to this power consumption on Line 27 and Line 28 are saved. In the Line 29, after the algorithm tries all the possible states, it returns the parameters corresponding to the lowest energy consumption to the device.

In the following algorithm, the numbers from 1 to 30 stand for the line numbers.

**Algorithm 1**

**1: procedure**

**2:** Calculate $K_{PDR}$ parameter by using Equation (2) and (3).

**3:** Calculate $K_d$ parameter by using Equations (6) and (7).

**4:** Calculate the $N_C$ value by using Equation (10).

**5:** Calculate $\Lambda_{frame}$ value by using Equation (9).

**6:** $P_{avg} \leftarrow \infty$ ;

**7:** **for** $\forall l \in L_{frameLength}$ **do**

**8:** **for** $s \leftarrow 1 : l$ **do**

**9:** $\vec{\Lambda}_{frame} \leftarrow \left[ \lambda^1_{frame} \lambda^2_{frame} \cdots \lambda^{N_c}_{frame} \right]$

**10:** $\vec{\Theta}_{frame} \leftarrow [0]_{1 \times S}$

**11:** $\vec{V'} \leftarrow [0]_{1 \times N_C}$

**12:** **while** $\exists \lambda^v_{frame} \in \vec{\Lambda}_{frame} : \lambda^v_{frame} \neq 0$ **do**

**13:** $v \leftarrow (index\ of\ the\ biggest\ value\ on\ the\ \vec{\Lambda}_{frame}\ vector)$

**14:** $i \leftarrow (index\ of\ the\ smallest\ value\ on\ th\vec{\Theta}_{frame}\ vector)$

**15:** $\vec{V'}[v] \leftarrow i$

**16:** $\vec{\Theta}_{frame}[i] \leftarrow \vec{\Theta}_{frame}[i] + \vec{\Lambda}_{frame}[v]$

**17:** $\vec{\Lambda}_{frame}[v] \leftarrow 0$

**18:** $i_{max} \leftarrow (index\ of\ the\ biggest\ value\ on\ the\ \vec{\Theta}_{frame}\ vector)$

**19:** $\pi_{PDR} \leftarrow 1 - K_{PDR} \times \Theta^{i_{max}}_{frame} \times \left[ 1 - \frac{1}{n_C^{i_{max}}} \right]$

**20:** $\pi_d \leftarrow \frac{1}{2} \times \left[ e^{K_d \times (1 - \pi_{PDR})} \right] \times l \times slotTime$

**21:** **if** $(\pi_{PDR} > \Delta_{PDR})\ \&\ (\pi_d < \Delta_d)$ **then**

**22:** $P'_{avg} \leftarrow s$

**23:** **for** $i \leftarrow 1 : s$ **do**

**24:** $P'_{avg} \leftarrow P'_{avg} + \dfrac{\vec{\Theta}_{frame}[i]}{1 - K_{PDR} \times \vec{\Theta}_{frame}[i] \times \left[ 1 - \frac{1}{n_C^i} \right]}$

**25:** $P'_{avg} \leftarrow \dfrac{P'_{avg}}{\Lambda_{frame}}$

**26:** **if** $P_{avg} > P'_{avg}$ **then**

27: $\quad\quad\quad\quad\quad\quad\quad\quad P_{avg} \leftarrow P'_{avg}$

28: $\quad\quad\quad\quad\quad\quad\quad\quad \vec{V} \leftarrow \vec{V'}$

29: $\quad\quad\quad\quad\quad\quad\quad\quad frameLength \leftarrow l$

30: $\quad$ **return** $\vec{V}, frameLength$

31: **end**

## Claims

1. Energy Efficient Scheduling Method and Algorithm for the Non-Deterministic Traffic in IEEE 802.15.4e Time Slotted Channel Hopping (TSCH) Medium Access Control **characterized by** comprising the process steps of;

   • calculating

$$K_{PDR} = \frac{1}{s} \times \sum_{i=1}^{s} k_{PDR}^{i}, \text{ where } k_{PDR}^{i} = \frac{1 - m_{PDR}^{i}}{\theta_{frame}^{i} \times \left[1 - \frac{1}{n_{C}^{i}}\right]},$$

   • calculating

$$K_d = \frac{1}{s} \times \sum_{i=1}^{s} k_{d}^{i}, \text{ where } k_{d}^{i} = \frac{\ln(2 \times m_{d}^{i})}{1 - m_{PDR}^{i}},$$

   calculating the number of total child nodes ($N_c$) where $N_C = \sum_{i=1}^{s} n_{C}^{i}$ and the total traffic load ($\Lambda_{frame}$) where

$$\Lambda_{frame} = \sum_{v=1}^{N_C} \lambda_{frame}^{v} \quad , \text{ which are constant parameters, respectively,}$$

   • assigning the average energy required for a packet to be successfully received ($P_{avg}$) to the biggest value,
   • repeating the processes within the loop for each frame length *(frameLength)* value in the $L_{frameLength}$ list by the device,
   • repeating the processes within the loop for each possible shared cell number (*s*) value according to the chosen *frameLength* value by the device,
   • forming the $\vec{\Lambda}_{frame}$ vector, which shows the traffic load of each child node,
   • creating the traffic load vector ($\vec{\Theta}_{frame}$) such that each element will be 0, which is updated as the shared cells are distributed,
   • forming the $\vec{V'}$ vector which indicates the shared cells assigned to the child nodes and each element of which corresponds to a child node,
   • distributing the traffic loads of the child nodes such that in each shared cell there will be equal load and updating $\vec{V'}$ and $\vec{\Theta}_{frame}$ values according to this distribution,
   • determining the shared cell that has the highest traffic load in order to control the requirements,
   • estimating the PDR metric $\pi_{PDR}$, which belongs to the shared cell with the highest traffic load, where

$$\pi_{PDR} = 1 - K_{PDR} \times \Theta_{frame}^{i_{max}} \times \left[1 - \frac{1}{n_C^{i_{max}}}\right] \text{ and } i_{max} \text{ is the index number of the shared cell that has the highest traffic load,}$$

   • estimating the average latency metric $\pi_d$ belonging to the same cell, where

$$\pi_d = \frac{1}{2} \times \left[e^{K_d \times (1 - \pi_{PDR})}\right] \times l \times slotTime,$$

   • comparing the estimated PDR and average latency values according to the threshold values determined by the user,

• If the PDR value is higher than the threshold value and the average latency value is lower than the threshold value, the device deciding that the corresponding state meets the requirements and starting to calculate the average energy consumption,

• calculating the average energy consumption for this state and saving the it on the $P'_{avg}$ variable,

• comparing the saved value to the lowest energy consumption calculated so far,

• if the saved value is lower, updating the lowest energy consumption value with the saved value in the next step,

• saving the state parameters corresponding to this energy consumption,

• after trying all the possible states, returning the obtained state values corresponding to the lowest energy consumption to the device,

• application of the transmitted output by the device.

2. A device adapted to use this method according to claim 1, **characterized in that** it selects cells by using a *slotOffset* (time slot offset) value different than the shared cells the parent nodes use, which are connected to it and interconnected for each shared cell, and a *channelOffset* (channel offset) value different than the shared cells the parent nodes use, which are not connected but physically close to it.

3. Method according to claim 1, **characterized by** having $K_{PDR}$ and $K_d$ constants, which do not change throughout all the process steps after the calculation and is applied according to these values.

4. Method according to claim 1, **characterized by** having $P_{avg}$, which is updated as the smaller values are found in the rest of the process steps after it is assigned to the biggest value.

5. Method according to claim 1, **characterized** having a $\vec{\Lambda}_{frame}$ vector, which indicates the traffic load of the corresponding node in terms of the average number of packet arrivals in a frame.

6. Method according to claim 1, **characterized by** having a infrastructure, which enables the estimation of the effect of a change in the total traffic load of the shared cell will have on the performance criteria with the help of the current measurements.

7. Method according to claim 1, **characterized by** having a structure, which provides the average packet delivery ratio (PDR) and the average packet latency measurements and finds the best network configuration by making estimations according to the obtained measurements.

8. Method according to claim 1, **characterized by** having subnetwork modeling, which provides for the estimation of the performance metrics that a parent node can obtain for different parameters with a shared cell.

9. Subnetwork modeling according to claim 8, **characterized by** having total traffic load of the child nodes assigned to the shared cell, and frame length parameters.

10. Device according to claim 2, **characterized by being** at the parent node position in the network and assigning shared cells which can meet the requirements for the child nodes connected to itself.

11. A method according to claim 1, **characterized by** being a scheduling network device that uses shared cells.

12. A method according to claim 1, **characterized in that** it determines the number of cells required to be assigned and the cells that the child nodes will use.

13. A method according to claim 1, **characterized in that** it determines the *frameLength* parameter from the values determined only in the $L_{frameLength}$ list.

14. A method according to claim 1, **characterized by** comprising the process steps of:

• providing the efficiency aimed for the method;

• finding the most efficient scheduling which meets the quality of service requirements, as a result of the computations made by the parent node,

• selecting the child nodes that share a cell and the amount of shared cells reserved for the child nodes according to this scheduling,
- making this choice according to the traffic intensity of the child nodes,
- obtaining the network configuration.

15. Method according to claim 1, **characterized by** providing a scheduling based on the estimation of the effect of the change in the network parameters on the quality of service metrics with the help of instantaneous measurements it will perform.

**Patentansprüche**

1. Energieeffizientes Planungsverfahren und Algorithmus für den nicht-deterministischen Verkehr in der IEEE 802.15.4e Zeitschlitz Kanal Sprung (TSCH) Medienzugriffssteuerung, **gekennzeichnet durch** sie die Prozessschritte von;

- Berechnen von

$$K_{PDR} = \frac{1}{s} \times \sum_{i=1}^{s} k_{PDR}^i, \text{ wobei } k_{PDR}^i = \frac{1 - m_{PDR}^i}{\theta_{frame}^i \times \left[1 - \frac{1}{n_C^i}\right]},$$

- Berechnen von

$$K_d = \frac{1}{s} \times \sum_{i=1}^{s} k_d^i, \text{ wobei } k_d^i = \frac{\ln(2 \times m_d^i)}{1 - m_{PDR}^i},$$

- Berechnen der Anzahl der gesamten Kindknoten ($N_c$), wobei $N_C = \sum_{i=1}^{s} n_C^i$ und die gesamte Verkehrslast ($\Lambda_{frame}$) wobei $\Lambda_{frame} = \sum_{v=1}^{N_C} \lambda_{frame}^v$ die jeweils konstante Parameter sind,
- Zuordnen der durchschnittlichen Energie, die für den erfolgreichen Empfang eines Pakets benötigt wird, ($P_{avg}$) zum größten Wert,
- Wiederholen der Prozesse innerhalb der Schleife für jeden Wert der Rahmenlänge *(frameLength)* in der Liste $L_{frameLength}$ durch die Vorrichtung,
- Wiederholen der Prozesse innerhalb der Schleife für jeden möglichen Wert der gemeinsamen Zellzahl (*s*) gemäß dem gewählten *frameLength* Wert durch die Vorrichtung,
- Bildung des $\vec{\Lambda}_{frame}$ Vektors, der die Verkehrslast jedes Kindknotens anzeigt,
- Erzeugen des Verkehrslastvektors ($\vec{\Theta}_{frame}$) so dass jedes Element 0 ist, was aktualisiert wird, wenn die gemeinsamen Zellen verteilt werden,
- Bilden des $\vec{V}$ Vektors der die den Kindknoten zugeordneten gemeinsamen Zellen anzeigt und von denen jedes Element einem Kindknoten entspricht,
- Verteilen der Verkehrslasten der Kindknoten, so dass es in jeder gemeinsamen Zelle eine gleiche Last gibt, und Aktualisieren der $\vec{V}$ und $\vec{\Theta}_{frame}$ Werte entsprechend dieser Verteilung,
- Bestimmen der gemeinsamen Zelle mit der höchsten Verkehrslast, um die Anforderungen zu steuern,
- Schätzen der PDR-Metrik $\pi_{PDR}$, ie zu der gemeinsamen Zelle mit der höchsten Verkehrslast gehört, wobei

$$\pi_{PDR} = 1 - K_{PDR} \times \Theta_{frame}^{i_{max}} \times \left[1 - \frac{1}{n_C^{i_{max}}}\right]$$

und $i_{max}$ ist die Indexnummer der gemeinsamen Zelle mit der höchsten Verkehrslast,
- Schätzen der durchschnittlichen Latenzmetrik $\pi_d$ der zur gleichen Zelle gehörenden Werte, wobei

$$\pi_d = \frac{1}{2} \times \left[e^{K_d \times (1 - \pi_{PDR})}\right] \times l \times slotTime,$$

- Vergleichen der geschätzten PDR und der durchschnittlichen Latenzwerte gemäß den vom Benutzer festgelegten Grenzwerten,

• Wenn der PDR-Wert höher als der Grenzwert und der durchschnittliche Latenzwert niedriger als der Grenzwert ist, entscheidet die Vorrichtung, dass der entsprechende Zustand die Anforderungen erfüllt und beginnt, den durchschnittlichen Energieverbrauch zu berechnen,

• Berechnen des durchschnittlichen Energieverbrauchs für diesen Zustand und Speichern desselben in der $P'_{avg}$ Variablen,

• Vergleich des eingesparten Wertes mit dem bisher niedrigsten berechneten Energieverbrauch,

• wenn der gespeicherte Wert niedriger ist, wird im nächsten Schritt der niedrigste Energieverbrauchswert mit dem gespeicherten Wert aktualisiert,

• Speichern der diesem Energieverbrauch entsprechenden Zustandsparameter,

• nach dem Ausprobieren aller möglichen Zustände, Rückgabe der erhaltenen Zustandswerte, die dem niedrigsten Energieverbrauch entsprechen, an die Vorrichtung,

• Anwendung der übertragenen Ausgabe durch die Vorrichtung.

2. Vorrichtung, die zur Verwendung dieses Verfahrens nach Anspruch 1 geeignet ist, **dadurch gekennzeichnet, dass** sie Zellen unter Verwendung eines *slotOffset* (Zeitschlitz-Offset) auswählt, der sich von den gemeinsamen Zellen unterscheidet, die die Elternknoten verwenden, die mit ihr verbunden und für jede gemeinsame Zelle miteinander verbunden sind, und eines *channelOffset* (Kanal-Offset) Wertes der sich von den gemeinsamen Zellen unterscheidet, die die Elternknoten verwenden, die nicht verbunden, aber physikalisch nahe an ihr sind.

3. Verfahren nach Anspruch 1, **gekennzeichnet durch** die mit $K_{PDR}$ und $K_d$ Konstanten, die sich nach der Berechnung über alle Prozessschritte hinweg nicht verändern und nach diesen Werten angewendet werden.

4. Verfahren nach Anspruch 1, **gekennzeichnet durch** die mit $P_{avg}$, das aktualisiert wird, wenn die kleineren Werte im Rest der Prozessschritte gefunden werden, nachdem es dem größten Wert zugeordnet wurde.

5. Verfahren nach Anspruch 1, **gekennzeichnet durch** die mit $\vec{\Lambda}_{frame}$ Vektor, das die Verkehrslast des entsprechenden Knotens in Bezug auf die durchschnittliche Anzahl der Paketeingänge in einem Frame angibt.

6. Verfahren nach Anspruch 1, **gekennzeichnet durch** eine Infrastruktur, die die Abschätzung der Auswirkungen einer Änderung der gesamten Verkehrslast der gemeinsamen Zelle auf die Leistungskriterien mit Hilfe der aktuellen Messungen ermöglicht.

7. Verfahren nach Anspruch 1, **gekennzeichnet durch** eine Struktur, die das durchschnittliche Paketlieferverhältnis (PDR) und die durchschnittlichen Paketlatenzmessungen liefert und die beste Netzwerkkonfiguration durch Schätzungen gemäß den erhaltenen Messungen findet.

8. Verfahren nach Anspruch 1, **gekennzeichnet durch** eine Subnetzmodellierung, die die Schätzung der Leistungskennzahlen bereitstellt, die ein Elternknoten für verschiedene Parameter mit einer gemeinsamen Zelle erhalten kann.

9. Subnetzmodellierung nach Anspruch 8, **gekennzeichnet durch** eine Gesamtverkehrslast der der gemeinsamen Zelle zugeordneten Kindknoten und Rahmenlängenparameter.

10. Vorrichtung nach Anspruch 2, **gekennzeichnet durch** sich an der Position des Elternknotens im Netzwerk befindet und gemeinsame Zellen zuweist, die die Anforderungen für die mit sich selbst verbundenen Kindknoten erfüllen können.

11. Verfahren nach Anspruch 1, **gekennzeichnet durch** sich um eine Planungsnetzwerkvorrichtung handelt, die gemeinsame Zellen verwendet.

12. Verfahren nach Anspruch 1, **dadurch gekennzeichnet, dass** es die Anzahl der zuzuordnenden Zellen und die Zellen bestimmt, die die Kindknoten verwenden werden.

13. Verfahren nach Anspruch 1, **dadurch gekennzeichnet, dass** es den Parameter *frameLength* Parameter aus den nur in der $L_{frameLength}$ Liste bestimmten Werten bestimmt.

14. Verfahren nach Anspruch 1, **gekennzeichnet durch** die Prozessschritte von:

• Bereitstellung der für das Verfahren angestrebten Effizienz;
• Finden der effizientesten Planung, die den Anforderungen an die Servicequalität entspricht, als Ergebnis der Berechnungen des Elternknotens,
• Auswählen der Kindknoten, die sich eine Zelle teilen, und der Anzahl der gemeinsamen Zellen, die für die Kindknoten gemäß dieser Planung reserviert sind,
• Treffen dieser Wahl entsprechend der Verkehrsintensität der Kinderknoten,
• Abrufen der Netzwerkkonfiguration.

15. Verfahren nach Anspruch 1, **gekennzeichnet durch** das Bereitstellen einer Planung auf der Grundlage der Schätzung der Auswirkungen der Änderung der Netzwerkparameter auf die Metriken für die Dienstqualität mit Hilfe von Sofortmessungen, die sie durchführen wird.

## Revendications

1. Méthode et Algorithme d'Ordonnancement Écoénergétique pour le Trafic Non-Déterministe dans IEEE 802.15.4e Contrôle d'Accès Moyen à Saut de Canal à Intervalle de Temps (TSCH) **caractérisés par le fait qu'**ils comprennent les étapes du processus de;

$$K_{PDR} = \frac{1}{s} \times \sum_{i=1}^{s} k_{PDR}^{i}, \quad \text{où} \quad k_{PDR}^{i} = \frac{1 - m_{PDR}^{i}}{\theta_{\text{frame}}^{i} \times \left[1 - \frac{1}{n_C^{i}}\right]},$$

• calculer

$$K_d = \frac{1}{s} \times \sum_{i=1}^{s} k_d^{i}, \quad \text{où} \quad k_d^{i} = \frac{\ln(2 \times m_d^{i})}{1 - m_{PDR}^{i}},$$

• calculer

• calculer le nombre total de nœuds enfants ($N_c$) où $N_C = \sum_{i=1}^{s} n_C^{i}$ et la charge de trafic totale ($\Lambda_{\text{frame}}$)

$$\Lambda_{frame} = \sum_{v=1}^{N_C} \lambda_{frame}^{v}$$

où ' qui sont des paramètres constants, respectivement,

• attribuer l'énergie moyenne requise pour qu'un paquet soit reçu avec succès ($P_{\text{avg}}$) à la valeur la plus élevée,
• répéter les processus dans la boucle pour chaque valeur de longueur d'image (*frameLength*) dans la liste $L_{frameLength}$ par l'appareil,
• répéter les processus à l'intérieur de la boucle pour chaque valeur possible de numéro de cellule partagée (s) en fonction de la valeur *frameLength* choisie par l'appareil,
• former le $\vec{\Lambda}_{frame}$ vecteur, qui montre la charge de trafic de chaque nœud enfant,
• créer le vecteur de charge de trafic ($\vec{\Theta}_{\text{frame}}$) de sorte que chaque élément sera 0, qui est mis à jour au fur et à mesure que les cellules partagées sont distribuées,
• former le vecteur $\vec{V}$ qui indique les cellules partagées attribuées aux nœuds enfants et dont chaque élément correspond à un nœud enfant,
• répartir les charges de trafic des nœuds enfants de telle sorte que dans chaque cellule partagée, il y aura les valeurs $\vec{V}$ et $\vec{\Theta}_{\text{frame}}$ de charge et mise à jour égales en fonction de cette distribution,
• déterminer la cellule partagée qui a la charge de trafic la plus élevée afin de contrôler les exigences,
• estimer la métrique PDR $\pi_{PDR}$, qui appartient à la cellule partagée ayant la charge de trafic la plus élevée, où

$$\pi_{PDR} = 1 - K_{PDR} \times \Theta_{frame}^{i_{max}} \times \left[1 - \frac{1}{n_C^{i_{max}}}\right]$$ et $i_{max}$ est le numéro d'index de la cellule partagée qui a la charge de trafic la plus élevée,

• estimer la métrique de latence moyenne $\pi_d$ appartenant à la même cellule, où

$$\pi_d = \frac{1}{2} \times \left[ e^{K_d \times (1 - \pi_{PDR})} \right] \times l \times slotTime,$$

• comparer les valeurs PDR estimées et les valeurs moyennes de latence en fonction des valeurs seuils déterminées par l'utilisateur,

• Si la valeur PDR est supérieure à la valeur seuil et la valeur de latence moyenne est inférieure à la valeur seuil, le dispositif décidant que l'état correspondant répond aux exigences et commençant à calculer la consommation moyenne d'énergie,

• calculer la consommation d'énergie moyenne pour cet état et l'enregistrer sur la variable $P'_{avg}$,

• comparer la valeur économisée à la consommation d'énergie la plus faible calculée jusqu'à présent,

• si la valeur enregistrée est inférieure, mettre à jour la valeur de consommation d'énergie la plus faible avec la valeur enregistrée à l'étape suivante,

• sauvegarder les paramètres d'état correspondant à cette consommation d'énergie,

• après avoir essayé tous les états possibles, renvoyer à l'appareil les valeurs d'état obtenues correspondant à la consommation d'énergie la plus faible,

• application de la sortie transmise par l'appareil.

2. Dispositif adapté pour utiliser cette méthode selon la revendication 1, **caractérisé en ce qu'**il sélectionne les cellules en utilisant une valeur de *slotOffset* (décalage de intervalle de temps) différente des cellules partagées utilisées par les nœuds parents, qui lui sont connectées et interconnectées pour chaque cellule partagée, et *channelOffset* (décalage de canal) différente de la valeur des cellules partagées utilisées par les nœuds parents, qui ne sont pas connectés mais physiquement proches d'eux.

3. Méthode selon la revendication 1, **caractérisée par le fait qu'**elle a des constantes $K_{PDR}$ et $K_d$, qui ne changent pas dans toutes les étapes du processus après le calcul et qui sont appliquées en fonction de ces valeurs.

4. Méthode selon la revendication 1, **caractérisée par le fait qu'**elle a $P_{avg}$, qui est mis à jour au fur et à mesure que les plus petites valeurs sont trouvées dans le reste des étapes du processus après qu'il a été affecté à la plus grande valeur.

5. Méthode selon la revendication 1, **caractérisée par le fait qu'**elle a un vecteur $\vec{\Lambda}_{frame}$, qui indique la charge de trafic du nœud correspondant en termes de nombre moyen d'arrivées de paquets dans une cadre.

6. Méthode selon la revendication 1, **caractérisée par le fait qu'**elle a une infrastructure permettant d'estimer, à l'aide des mesures actuelles, l'effet d'un changement de la charge totale de trafic de la cellule partagée sur les critères de performance.

7. Méthode selon la revendication 1, **caractérisée par le fait qu'**elle a une structure qui fournit le taux moyen de distribution de paquets (PDR) et les mesures moyennes de latence de paquets et trouve la meilleure configuration de réseau en faisant des estimations en fonction des mesures obtenues.

8. Méthode selon la revendication 1, **caractérisée par le fait qu'**elle a une modélisation de sous-réseau, qui fournit l'estimation des mesures de performance qu'un nœud parent peut obtenir pour différents paramètres avec une cellule partagée.

9. Modélisation de sous-réseaux selon la revendication 8, **caractérisée par le fait qu'**elle a la charge totale de trafic des nœuds enfants affectés à la cellule partagée, et les paramètres de longueur de trame.

10. Dispositif selon la revendication 2, **caractérisée par le fait qu'**il étant à la position du nœud parent dans le réseau et affecter des cellules partagées qui peuvent répondre aux besoins des nœuds enfants connectés à lui-même.

11. Méthode selon la revendication 1, **caractérisée par le fait qu'**elle étant un dispositif réseau d'ordonnancement qui utilise des cellules partagées.

12. Méthode selon la revendication 1, **caractérisée en ce qu'**elle il détermine le nombre de cellules à affecter et les cellules que les nœuds enfants utiliseront.

13. Méthode selon la revendication 1, **caractérisée en ce qu'**elle détermine le paramètre *frameLength* à partir des valeurs déterminées uniquement dans la liste $L_{frameLength}$.

**14.** Méthode selon la revendication 1, **caractérisée par le fait qu'**elle comprend les étapes du processus de:

> • fournir l'efficacité visée pour la méthode ;
> • trouver l'ordonnancement le plus efficace qui répond aux exigences de qualité de service, grâce aux calculs effectués par le nœud parent,
> • sélectionner les nœuds enfants qui partagent une cellule et le nombre de cellules partagées réservées aux nœuds enfants en fonction de cet ordonnancement,
> • faire ce choix en fonction de l'intensité du trafic des nœuds enfants,
> • obtenir la configuration du réseau.

**15.** Méthode selon la revendication 1, **caractérisée par le fait qu'**elle fournit un ordonnancement basé sur l'estimation de l'effet de la modification des paramètres du réseau sur les paramètres de qualité de service à l'aide de mesures instantanées qu'il effectuera.

slotOffset

|  | 0 | 1 | 2 | 3 | 4 | 5 | 6 |
|---|---|---|---|---|---|---|---|
| 7 |  |  |  |  |  |  |  |
| 6 |  |  |  |  |  |  |  |
| 5 |  |  |  |  |  | 1,3,5 |  |
| 4 |  |  |  |  |  |  |  |
| 3 |  |  |  |  |  |  |  |
| 2 |  |  |  |  | 2,4 |  |  |
| 1 |  |  |  |  |  |  |  |
| 0 |  |  |  |  |  |  |  |

channelOffset

**figure 1**

**figure 2**

**figure 3**

figure 4

**figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017037403 A1
- US 2008279155 A
- US 20130250928 A1
- US 9485157 B2

**Non-patent literature cited in the description**

- *Scheduling High-rate Unpredictable Traffic in IEEE 802.15.4 TSCH Networks*
- *Decentralized Traffic Aware Scheduling for multi-hop Low Power Lossy Networks in the Internet of Things*